# EUROPÄISCHE PATENTANMELDUNG

(11) **EP 4 725 284 A1**
(43) Veröffentlichungstag der Anmeldung: **15.04.2026**
(21) Anmeldenummer: 25183633.4
(22) Anmeldetag: 18.06.2025
(51) Int. Cl.: A01D 1/00

(54) **FÖRDEREINRICHTUNG ZUR VEWENDUNG IN EINEM SCHNEIDWERK EINER LANDWIRTSCHAFTLICHEN ERNTEMASCHINE SOWIE SCHNEIDWERK UND ERNTEMASCHINE**

(30) Priorität: 05.07.2024 DE 102024119143
(71) Anmelder: CLAAS Selbstfahrende Erntemaschinen GmbH, 33428 Harsewinkel (DE)
(72) Erfinder: Zelenyánszki, Tamás, 5600 Békéscsaba (HU); Füchtling, Christian, 48317 Rinkerode Drenstein (DE); Göblyös, Attila Sándor, 5200 Törökszentmiklós (HU)
(74) Vertreter: CLAAS Gruppe

(57) **Zusammenfassung**

Die vorliegende Anmeldung betrifft eine Fördereinrichtung (12) zur Verwendung in einem Schneidwerk (2) einer landwirtschaftlichen Erntemaschine, umfassend einen Rahmen sowie mindestens ein Förderband (1), das endlos um zwei parallel zueinander angeordneten Rollen (3, 3') umlaufend ist, wobei ein Abstand zwischen den beiden Rollen (3, 3') mittels einer Spannvorrichtung (4) einstellbar ist, wobei eine erste Rolle (3) drehantreibbar ist und eine zweite Rolle (3') frei umlaufend gelagert ist, wobei der ersten angetriebenen Rolle (3) eine Einrichtung zur Drehzahlerfassung (8) zugeordnet ist, wobei die Einrichtung zur Drehzahlerfassung (8) dazu eingerichtet und vorgesehen ist, eine Drehzahl der ersten Rolle (3) zu erfassen.

Um eine Fördereinrichtung mit mindestens einem Förderband (1) der vorgenannten Art bereitzustellen, bei dem die Erfassung der Geschwindigkeit des Förderbandes (1) zuverlässig möglich ist, wird erfindungsgemäß vorgeschlagen, dass der zweiten Rolle (3') eine zweite Einrichtung zur Drehzahlerfassung (41) zugeordnet ist, wobei die Einrichtung zur Drehzahlerfassung (41) dazu eingerichtet und vorgesehen ist, eine Drehzahl der zweiten Rolle (3') im Betrieb des Förderbandes (1) zu erfassen.

## Beschreibung

Die vorliegende Erfindung betrifft eine Fördereinrichtung zur Verwendung in einem Schneidwerk einer landwirtschaftlichen Erntemaschine gemäß dem Oberbegriff von Anspruch 1. Ferner betrifft die vorliegende Anmeldung ein Schneidwerk zur Verwendung an einer landwirtschaftlichen Erntemaschine gemäß dem Oberbegriff von Anspruch 8. Schließlich betrifft die vorliegende Anmeldung eine landwirtschaftliche Erntemaschine gemäß dem Oberbegriff von Anspruch 9.

Aus dem Stand der Technik bekannte Schneidwerke umfassen beispielsweise einen Messerbalken als Schneideinrichtung, welcher sich im Wesentlichen über eine gesamte Breite des Schneidwerks erstreckt. Weiterhin weisen derartige Schneidwerke mindestens eine hinter dem Messerbalken angeordnete Fördereinrichtung auf. Die einzelnen Fördereinrichtungen dienen dabei dazu, von dem Messerbalken abgeschnittenes Erntegut zu transportieren. Hierzu weisen bekannte Schneidwerke mindestens ein endlos umlaufendes Mittenförderband auf, das einem Mittenabschnitt des Schneidwerks zugeordnet ist. Das Mittenförderband dient zur Beförderung von Erntegut entlang einer ersten Transportrichtung. Weiterhin weisen die bekannten Schneidwerke typischerweise ein erstes endlos umlaufendes Seitenförderband zur Beförderung von Erntegut entlang einer zweiten Transportrichtung sowie ein zweites endlos umlaufendes Seitenförderband zur Beförderung von Erntegut entlang einer dritten Transportrichtung auf. Die beiden Seitenförderbänder sind dabei einem Seitenabschnitt des Schneidwerks zugeordnet. Die Transportrichtungen der Förderbänder sind derart ausgerichtet, dass die zweite Transportrichtung entgegen der dritten Transportrichtung ausgerichtet ist, während die erste Transportrichtung in einem Winkel kleiner oder gleich 90° zu der zweiten und dritten Transportrichtung ausgerichtet ist. Auf diese Weise kann das abgeschnittene Erntegut mittels des ersten und zweiten Seitenförderbands entlang der zweiten bzw. dritten Transportrichtung in Richtung des Mittenförderbands transportiert werden.

Schneidwerke der eingangs genannten Art werden als Bandschneidwerke (auch "Draper-Schneidwerke") bezeichnet. Sie zeichnen sich durch ein hohes Maß an Flexibilität bei der Anpassung an eine Bodenkontur einer zu bearbeitenden Fläche aus. Erreicht wird dies durch den Verzicht auf einen in sich starren Schneidwerkstisch, wie er bei Getreideschneidwerken typischerweise üblich ist. Hierzu weist das Schneidwerk zumindest eine Fördereinrichtung mit einem endlos umlaufend, angetriebenen Förderband auf, welches wiederum von einer Vielzahl von um eine Drehachse schwenkbaren Tragarmen eines jeweiligen Seitenabschnitts des Schneidwerks getragen wird.

Die zwei parallel zueinander verlaufenden Rollen des Förderbandes sind endseitig innenliegend angeordnet, so dass das Förderband endlos umlaufen kann. Die erste Rolle ist dabei drehantreibbar, während die zweite Rolle frei umlaufend gelagert ist. Ein Bandschneidwerk mit einer entsprechenden Fördereinrichtung geht beispielsweise aus der DE 10 2017 111 060 A1 hervor.

Bei Überlastung einer Fördereinrichtung, bei Verschmutzungen zwischen Rollen und Band oder bei Schäden an Förderband oder Rolle kann es bei dem Förderband zu Schlupf kommen, bei dem die angetriebene Rolle durchrutscht und die Umfangsgeschwindigkeit nicht wie gewünscht auf das Förderband übertragen wird.

Zur Überwachung der Bandgeschwindigkeit des Förderbandes auf Stillstand oder Schlupf ist es bekannt, die Drehzahl der angetriebenen Rolle zu erfassen. Weiterhin ist aus dem Stand der Technik bekannt, ein an dem Band anliegendes Tastrad sowie einen zugehörigen Sensor anzuordnen, um die Bandgeschwindigkeit zu erfassen. Ein Vergleich der beiden Sensorsignale, die des Tastrades und der angetriebenen Rolle, gibt dann Rückschlüsse auf ein Durchrutschen des Förderbandes.

Allerdings kann es vorkommen, dass Verschmutzungen zwischen Tastrad und Förderband gelangen, so dass die Geschwindigkeit des Förderbandes nicht zuverlässig ermittelt werden kann. Somit ist eine genaue Bestimmung des Schlupfes des Förderbandes nicht immer zuverlässig möglich.

Die Aufgabe der vorliegenden Anmeldung besteht nun darin, eine Fördereinrichtung mit mindestens einem Förderband der vorgenannten Art bereitzustellen, bei dem die Erfassung der Geschwindigkeit des Förderbandes zuverlässig möglich ist.

Diese Aufgabe wird erfindungsgemäß mittels einer Fördereinrichtung mit den Merkmalen von Anspruch 1 gelöst. Vorteilhafte Ausgestaltungen ergeben sich aus den zugehörigen Unteransprüchen.

Die Fördereinrichtung umfasst einen Rahmen sowie mindestens ein Förderband, das endlos um zwei parallel zueinander angeordneten Rollen umlaufend ist, wobei ein Abstand zwischen den beiden Rollen mittels einer Spannvorrichtung einstellbar ist, wobei eine erste Rolle drehantreibbar ist und eine zweite Rolle frei umlaufend gelagert ist, wobei der ersten angetriebenen Rolle eine Einrichtung zur Drehzahlerfassung zugeordnet ist, wobei die Einrichtung zur Drehzahlerfassung dazu eingerichtet und vorgesehen ist, eine Drehzahl der ersten Rolle zu erfassen. Die Fördereinrichtung eignet sich zur Verwendung in einem Schneidwerk einer landwirtschaftlichen Erntemaschine. Hierbei kann die Fördereinrichtung beispielsweise und vorzugsweise als Mittenförderband und/oder als Seitenförderband eingesetzt werden. Die erste Rolle kann beispielsweise über einen Motor, vorzugsweise einen Hydromotor, angetrieben werden.

Das Schneidwerk umfasst eine Schneideinrichtung zum Abschneiden von auf einem Feld aufstehenden Pflanzen sowie mindestens eine Fördereinrichtung zur Förderung der abgeschnittenen Pflanzen in Richtung einer rückwärtigen Übergabeöffnung. Die Schneideinrichtung kann beispielsweise und vorzugsweise von einem Mähbalken bzw. Messerbalken gebildet sein.

Die Fördereinrichtung ist ferner derart ausgebildet, dass der zweiten Rolle eine zweite Einrichtung zur Drehzahlerfassung zugeordnet ist, wobei die Einrichtung zur Drehzahlerfassung dazu eingerichtet und vorgesehen ist, eine Drehzahl der zweiten Rolle im Betrieb des Förderbandes zu erfassen. Die Erfassung der Drehzahl an der zweiten mitlaufenden Rolle ist wesentlich zuverlässiger als das Erfassen der Bandgeschwindigkeit des Förderbands mittels eines Tastrades, wie es im Stand der Technik praktiziert wird. Dementsprechend kann auf die Anordnung eines aus dem Stand der Technik bekannten Tastrades verzichtet werden. Ein Vergleich der Drehzahl der ersten angetriebenen Rolle mit der Drehzahl der zweiten, frei mitlaufenden Rolle macht eine zuverlässige Schlupfbestimmung möglich.

Gemäß einer vorteilhaften Ausgestaltung der Erfindung ist es vorgesehen, dass die zweite Einrichtung zur Drehzahlerfassung eine analog zu der zweiten Rolle drehbare Scheibe mit Zähnen und einen feststehenden Sensor zur Erfassung von vorbeibewegten Zähnen der Scheibe umfasst. Die Scheibe kann beispielsweise und vorzugsweise an oder auf der Rolle oder an oder auf einem fest mit der Rolle verbundenen Bauteil montiert sein und sich daher mit der Rolle "mitdrehen", wobei die Scheibe sich prinzipbedingt mit derselben Drehzahl dreht wie die Rolle. Dies stellt eine technisch einfache Art der Drehzahlerfassung dar, die unempfindlich ist und zuverlässig funktioniert. Als Sensoren stehen verschiedene Sensoren sinnvoll zur Verfügung, wie beispielsweise optische oder induktive Sensoren. Selbstverständlich sind auch andere Arten von Sensoren denkbar.

In besonders bevorzugter Weise ist ein Wellensegment vorgesehen, das endseitig drehfest mit der Rolle verbunden ist, wobei die Scheibe mit Zähnen auf dem Wellensegment positioniert ist. Dabei kann das Wellensegment unmittelbar oder mittelbar mit der Rolle verbunden sein. Beispielsweise kann das Wellensegment mittelbar mittels einer Schraube mit der Rolle verbunden sein. Vorteilhafterweise ist das Wellensegment lösbar mit der Rolle verbunden, so dass es für Wartungs- oder Reparaturzwecke entfernt werden kann. Dadurch, dass das Wellensegment am Ende der Rolle liegt, wo typischerweise kein Band um die Rolle läuft, wird die mögliche Verschmutzung der auf dem Wellensegment befindlichen Scheibe zur Drehzahlerfassung reduziert. Das Vorsehen des Wellensegmentes stellt eine einfache Möglichkeit dar, ausreichend Platz für die Anordnung der Scheibe mit Zähnen für die Drehzahlmessung zu schaffen und zugleich die Scheibe in einem gewissen Abstand von der eigentlichen Rolle anzuordnen, um sie möglichst von Verschmutzungen fernzuhalten.

Dabei kann das Wellensegment beispielsweise als Hohlwelle ausgebildet sein und mittels einer koaxial verlaufenden Schraube mit der Rolle verbunden sein. Hierzu kann die Rolle eine entsprechende axiale Ausnehmung aufweisen, in der die Schraube eingedreht wird. In einer anderen Ausführungsform ist das Wellensegment beispielsweise einteilig mit der Rolle ausgebildet und als endseitiger Vorsprung oder Nase der Rolle ausgebildet.

Es versteht sich, dass eine Drehachse der Rolle einer Drehachse des Wellensegments entspricht.

Die Anordnung eines lösbar fixierten Wellensegmentes ermöglicht es ferner, die Einrichtung zur Drehzahlerfassung an bestehenden Fördereinrichtungen nachzurüsten. Das Wellensegment stellt somit eine nachrüstbare modulare und lösbare Achsverlängerung der Rolle für die Anordnung der Scheibe dar.

In Bezug auf das Wellensegment hat es sich als besonders vorteilhaft gezeigt, wenn das Wellensegment durch eine Öffnung in einem Rahmen der Fördereinrichtung geführt ist und auf einer dem Lager und der zweiten Rolle abgewandten Seite des Rahmens der Fördereinrichtung endet, wobei die Scheibe auf der dem Lager und der Rolle abgewandten Seite des Wellensegmentes angeordnet ist. Die zweite Rolle ist endseitig zu beiden Seiten hin jeweils in einem Lager drehbar gelagert, wobei die Lager wiederum jeweils an dem Rahmen der Fördereinrichtung angebracht sind. Hieraus ergibt sich, dass die zweite Rolle innerhalb des Rahmen und zwischen den Lagern befindlich ist. Durch das Vorsehen der Scheibe auf der der Rolle abgewandten Seite des Rahmens wird erreicht, dass der Abstand der Scheibe und somit der Abstand der Einrichtung zur Drehzahlerfassung zu der zweiten Rolle größer ist, wodurch sich die Einrichtung zur Drehzahlerfassung in einem größeren Abstand zu einem Arbeitsbereich des Förderbandes befindet. Folglich kommt es dort deutlich weniger zu Verschmutzungen, so dass die Zuverlässigkeit der Messung weiter erhöht wird. Hinzu kommt, dass sich bei dieser Ausführungsform zwischen der Rolle und der Einrichtung zur Drehzahlerfassung der Rahmen der Fördereinrichtung befindet, der quasi als Barriere gegen Verschmutzungen dient. Ferner bietet diese Ausführungsvariante auch bei herkömmlichen Förderbändern mit vermeintlichen mangelnden Platzverhältnissen immer die Möglichkeit einer Nachrüstung der Einrichtung zur Drehzahlerfassung.

Die Fördereinrichtung weiter ausgestaltend ist ein Halter für den Sensor vorgesehen, wobei der Halter in einem Bereich der Scheibe angeordnet ist, vorzugsweise mittelbar oder unmittelbar an dem Rahmen befestigt ist. Der Halter kann beispielsweise über Schraubverbindungen direkt an dem Rahmen befestigt sein, so dass er ebenfalls auf einfache Weise nachrüstbar ist. Der Halter bietet eine komfortable Möglichkeit, den Sensor zu montieren und gegebenenfalls auszutauschen.

Den Halter für den Sensor in vorteilhafter Weise weiter ausgestaltend ist vorgesehen, dass dieser an einem entlang des Rahmens verschieblichen Schlitten befestigt ist. Der Schlitten kann als Klotz, Scheibe oder ähnlich ausgebildet sein, wobei der Schlitten verschieblich an dem Rahmen gelagert ist. Somit ist der Halter mittelbar mit dem Rahmen verbunden. Es versteht sich, dass der Schlitten in verschiedenen Positionen, vorzugsweise stufenlos, fixierbar ist, so dass der Halter mit dem Sensor im Betrieb der Fördervorrichtung feststeht. Die Fixierung kann beispielsweise allein durch einen Linearantrieb bewirkt sein, mittels dessen der Schlitten bewegt wird. Die Verschieblichkeit des Schlittens und somit des Halters ist vorteilhaft, da die Position des Halters auf diese Weise an eventuelle Lageänderungen der zweiten Rolle und somit der Scheibe angepasst werden kann. Vorzugsweise ist der Halter innerhalb eines Langlochs in dem Rahmen verschieblich, wobei das Langloch weiter vorzugsweise eine Längsachse besitzt, die parallel zu einer Verschiebungsrichtung der mittels der Spannvorrichtung verschobenen zweiten Rolle verläuft. Das bedeutet, dass die Bewegung des Halters über den Schlitten durch das Langloch in dem Rahmen vorgegeben wird und die maximalen Endstellungen durch ein Anschlagen des Halters an den beiden Enden des Langlochs vorgegeben sind. Das Langloch kann optional mit einer Abdeckung versehen sein. Die Bewegung des Schlittens kann beispielsweise und vorzugsweise durch die Spannvorrichtung bewirkt werden. Mit anderen Worten ist beispielsweise und vorzugsweise der Schlitten mit der Spannvorrichtung derart verbunden, dass der Schlitten mittels der Spannvorrichtung bewegbar ist.

In einer besonders bevorzugten Ausgestaltung der Erfindung ist vorgesehen, dass eine Verschiebung des Halters an eine Verschiebung der zweiten Rolle durch die Spannvorrichtung gekoppelt ist. Somit bewirkt die Verschiebung der zweiten Rolle gleichzeitig eine Verschiebung des Halters und eine getrennte Betätigung von Spannvorrichtung und Positionierung des Halters ist entbehrlich. Typischerweise ist es bei der Spanneinrichtung so, dass sie an der zweiten, mitlaufenden Rolle vorgesehen ist, so dass die zweite Rolle in Richtung und weg von der angetriebenen Rolle bewegt werden kann. Auf diese Weise kann ausreichend Spannung auf das Förderband gegeben werden.

In Bezug auf das eingangs genannte Schneidwerk zur Verwendung an einer landwirtschaftlichen Erntemaschine wird die Aufgabe dadurch gelöst, dass mindestens eine der Fördereinrichtungen des Schneidwerks gemäß einem der Ansprüche 1 bis 7 ausgebildet ist. Die Vorteile für das erfindungsgemäße Schneidwerk entsprechen analog den oben genannten Vorteilen der erfindungsgemäßen Fördereinrichtung. Bei dem Schneidwerk kann es sich beispielsweise und vorzugsweise um ein sog. Draper-Schneidwerk handeln, das über mehrere Fördereinrichtungen verfügt, die jeweils ein Förderband aufweisen. Ein solches Schneidwerk umfasst zwei Seitenabschnitte und einen Mittenabschnitt, wobei in den Seitenabschnitten jeweils eine Fördereinrichtung angeordnet ist. Die Fördereinrichtungen dienen dazu, mittels der Schneideinrichtung abgeschnittene Pflanzen in Richtung des Mittenabschnitts zu fördern. Hierbei werden die Fördereinrichtungen in den beiden Seitenabschnitten gegenläufig betrieben. Ferner umfasst ein solches Schneidwerk mindestens eine Fördereinrichtung in dem Mittenabschnitt. Dieses ist dazu vorgesehen, die abgeschnittenen Pflanzen in Richtung einer rückwärtigen Übergabeöffnung zu fördern, sodass die Pflanzen durch die Übergabeöffnung an ein nachgelagertes Arbeitsorgan der Erntemaschine übergeben werden können. Hierbei handelt es sich beispielsweise und vorzugsweise um einen Schrägförderer der Erntemaschine, an dem das Schneidwerk aufgehängt ist.

Hinsichtlich einer eingangs genannten landwirtschaftlichen Erntemaschine, insbesondere in Form eines selbstfahrenden Mähdreschers, wird die Aufgabe dadurch gelöst, dass die Erntemaschine mindestens ein Schneidwerk gemäß Anspruch 9 umfasst. Auch hier entsprechen die Vorteile der landwirtschaftlichen Erntemaschine analog den oben genannten Vorteilen der erfindungsgemäßen Fördereinrichtung.

Eine besonders bevorzugte Ausbildung der erfindungsgemäßen landwirtschaftlichen Erntemaschine besitzt eine Datenverarbeitungseinrichtung, die in Daten übertragender Weise mit den Einrichtungen der Drehzahlerfassung verbunden ist, wobei die Datenverarbeitungseinrichtung dazu vorgesehen und eingerichtet ist, die von den Einrichtungen erfassten Drehzahlen zu verarbeiten und einen Vergleich der erfassten Drehzahlen vorzunehmen. Liegt eine Differenz zwischen den Drehzahlen der ersten und zweiten Rolle vor, so kann davon ausgegangen werden, dass das Förderband nicht ordnungsgemäß umläuft. Daraufhin können entsprechende Maßnahmen ergriffen werden.

Schließlich ist es besonders von Vorteil, wenn die Datenverarbeitungseinrichtung dazu vorgesehen und eingerichtet ist, bei einem Detektieren einer Differenz zwischen den Drehzahlen der ersten und zweiten Rolle ein Signal zu erzeugen. Bei dem Signal kann es sich beispielsweise um die Ausgabe eines akustischen Signals handeln, die eine Bedienperson dazu veranlasst nach dem Rechten zu sehen. Es kann sich bei dem Signal auch um die Abgabe eines Signals handeln, das auf den Betrieb der Erntemaschine einwirkt, beispielsweise dessen Fahrgeschwindigkeit verringert.

Die Erfindung ist nachstehend anhand eines Ausführungsbeispiels, das in den Figuren dargestellt ist, näher erläutert. Es zeigt:
- Fig. 1:: Eine Draufsicht auf ein erfindungsgemäßes Schneidwerk.
- Fig. 2:: Eine perspektivische, teilweise geschnittene Ansicht eines Mittenabschnitts des Schneidwerks aus Figur 1.
- Fig. 3:: Eine perspektivische Ansicht einer Einrichtung zur Drehzahlerfassung der ersten, angetriebenen Rolle
- Fig. 4:: Eine perspektivische Ansicht einer Einrichtung zur Drehzahlerfassung der zweiten, mitlaufenden Rolle und
- Fig. 5:: Einen Schnitt durch die zweite Rolle aus Figur 4.

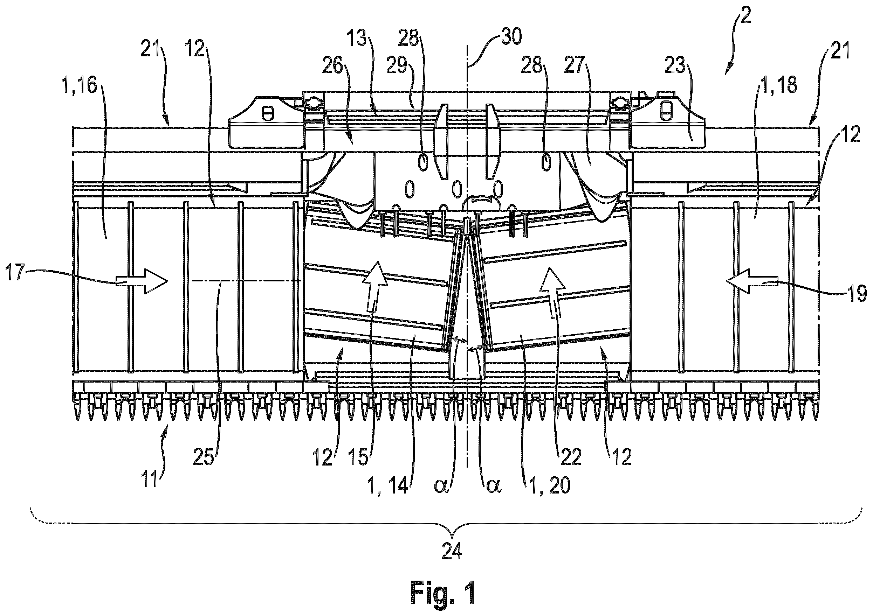

Ein Ausführungsbeispiel, das in den **Figuren 1 bis 5** dargestellt ist, umfasst ein erfindungsgemäßes Schneidwerk zur Verwendung in einer landwirtschaftlichen Erntemaschine, insbesondere in einem selbstfahrenden Mähdrescher. Das Schneidwerk **2** ist als ein so genanntes Draper-Schneidwerk ausgeführt, welches sich durch ein hohes Maß an Flexibilität bei der Anpassung an eine Bodenkontur einer zu bearbeitenden bzw. abzuerntenden Fläche auszeichnet.

Das Schneidwerk **2** weist einen Grundrahmen **23** auf und lässt sich in einen Mittenabschnitt **13** und zumindest zwei benachbart zu dem Mittenabschnitt **13** angeordnete Seitenabschnitte **21** unterteilen. An dem Mittenabschnitt **13** und den Seitenabschnitten **21** ist auf der dem Grundrahmen **23** gegenüberliegenden Vorderseite ein Messerbalken **11** angeordnet, der sich im Wesentlichen über die gesamte Breite **24** des Schneidwerks **2** erstreckt. Weiterhin sind an dem Grundrahmen **23** des Schneidwerks **2** nicht dargestellte Haspeln angeordnet, die sich über die Breite **24** eines Seitenabschnitts **21** sowie teilweise über die Breite **24** des Mittenabschnitts **13** erstrecken. Die Haspeln dienen der Verbesserung der Annahme des Erntegutes durch den Messerbalken **11.**

Das von dem Messerbalken **11** abgetrennte Erntegut wird dem Messerbalken **11** über Fördereinrichtungen **12** zugeführt. Die Fördereinrichtungen **12** weisen jeweils endlos umlaufende Förderbänder **1** auf. Zwei der Fördereinrichtungen **14, 20,** welche im Folgenden als "Mittenfördereinrichtungen" bezeichnet werden, sind dem Mittenabschnitt **13** zugeordnet, während die anderen beiden Fördereinrichtungen **16, 18** jeweils den zwei Seitenabschnitten **21** zugeordnet sind und im Folgenden als "Seitenfördereinrichtungen" bezeichnet werden.

Die endlos umlaufenden, den Seitenabschnitten **21** zugeordneten Förderbänder 1 der Seitenfördereinrichtungen **16, 18** sind benachbart zu den dem Mittenabschnitt **13** zugeordneten Mittenfördereinrichtungen **14, 20** angeordnet, um das von dem Messerbalken **11** abgeschnittene Erntegut parallel zu einer Längsachse **25** des Schneidwerks **2** in Richtung des Mittenabschnitts **13** zu transportieren. Hierfür sind die jeweiligen Transportrichtungen **17, 19** parallel zu der Längsachse **25** des Schneidwerks **2** und entgegengesetzt zueinander ausgerichtet.

Im Bereich des Mittenabschnitts **13** wird das Erntegut einer Einzugsvorrichtung **26** zugeführt. Die Einzugsvorrichtung **26** ist als eine antreibbare Einzugswalze **27,** die an dem Grundrahmen **23** gelagert ist, ausgeführt. Die Einzugswalze **27** weist einziehbare Finger **28** auf. Die Einzugsvorrichtung **26** führt das von den endlosen Förderbändern 1 der Seitenfördereinrichtungen **16, 18** dem Mittenabschnitt **13** seitlich zugeführte Erntegut einer in dem Grundrahmen **23** vorgesehenen, hinter der Einzugswalze **27** befindlichen, Übergabeöffnung zu, durch welche das abgeschnittene Erntegut durch einen lediglich andeutungsweise dargestellten Einzugskanal **29** eines Mähdreschers, an dem das Schneidwerk **2** befestigbar ist, dem Mähdrescher zur weiteren Verarbeitung übergeben wird.

Mit dem Bezugszeichen **15** und **22** gekennzeichnete Pfeile deuten die Transportrichtungen der beiden Mittenfördereinrichtungen **14, 20** an. Die beiden Mittenfördereinrichtungen **14, 20** sind zu einer Längsachse **25** des Schneidwerks **2** geneigt angeordnet. Die benachbart auf den Seitenabschnitten **21** angeordneten Förderbänder 1 der Seitenfördereinrichtungen **16, 18** überlappen das jeweilige Förderband 1 der Mittenfördereinrichtungen **14, 20** abschnittsweise. Die Anordnung der Mittenfördereinrichtungen **14, 20** ist derart gewählt, dass deren Förderbänder 1 im Wesentlichen V-förmig ist. Dazu sind die beiden Mittenfördereinrichtungen **14, 20** in die jeweilige Transportrichtung **15, 22** aufeinander zulaufend angeordnet. Dabei schließt das jeweilige Förderband 1 der Mittenfördereinrichtung **14, 20** mit der Längsachse **30** des Mittenabschnitts **13** einen Winkel **α** ein, der größer oder gleich 5° beträgt. Zu der ersten Transportrichtung **15** bzw. vierten Transportrichtung **22** schließen die beiden Transportrichtungen **17, 19** der Seitenfördereinrichtungen **16, 18** jeweils einen Winkel von 90°- **α** ein. Die V-förmige Anordnung der Förderbänder 1 der Mittenfördereinrichtungen **14, 20** führt zu einer Zusammenführung des Erntegutes in den Mittenbereich des Mittenabschnitts **13,** sodass ein Zurückstauen von Erntegut auf dem Mittenabschnitt **13** zu den Seitenfördereinrichtungen **16, 18** hin reduziert wird.

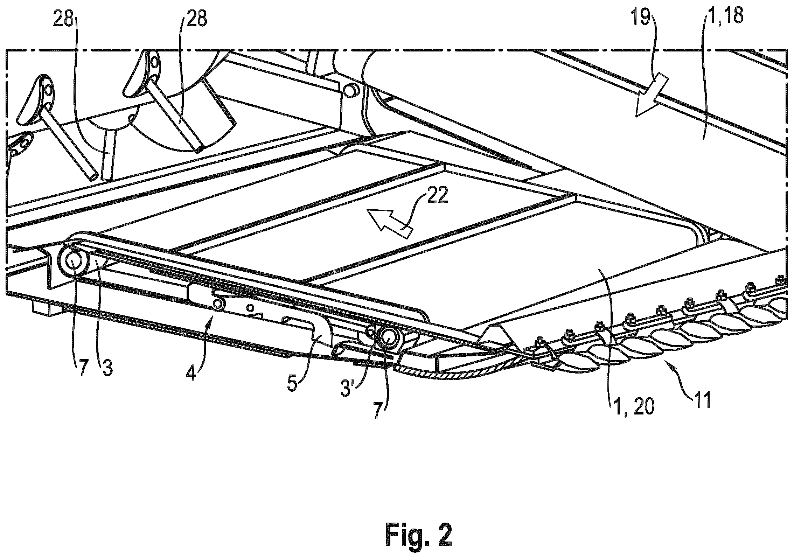

Jede der Fördereinrichtungen **12** weist innenliegend jeweils zwei endseitig angeordnete Rollen **3, 3'** auf, die parallel zueinander angeordnet sind. Dies ist in der **Figur 2** gut zu erkennen, die eine perspektivische, teilweise geschnittene Teilansicht des Mittenabschnitts **13** des Schneidwerks **2** gemäß **Figur 1** zeigt. Dargestellt ist in dieser Ansicht lediglich das Förderband 1 der Mittenfördereinrichtung **20.** Eine erste Rolle **3** der Mittenfördereinrichtung **20** ist von einem Hydraulikmotor **6** des Schneidwerks **2** antreibbar ausgebildet, während die zweite Rolle **3'** des Förderbands **1** frei umlaufend gelagert ist. Die antreibende Rolle **3** treibt jeweils das Förderband **1** über einen Reibschluss an. Hierfür wird eine ausreichende Spannung des Förderbands **1** benötigt. Diese Spannung wird über eine (linear) verlagerbare Rolle **3'** eingestellt und aufrechterhalten. Dabei wird die frei umlaufende Rolle **3'** als Spannrolle für das Förderband **1** genutzt. Eine entsprechende Spannvorrichtung **4** mit Betätigungshebel **5** ist aus dem Stand der Technik bekannt, so dass hierauf nicht weiter eingegangen wird. Die Rollen **3, 3'** weisen jeweils eine Drehachse **7** auf, um die sie sich drehen.

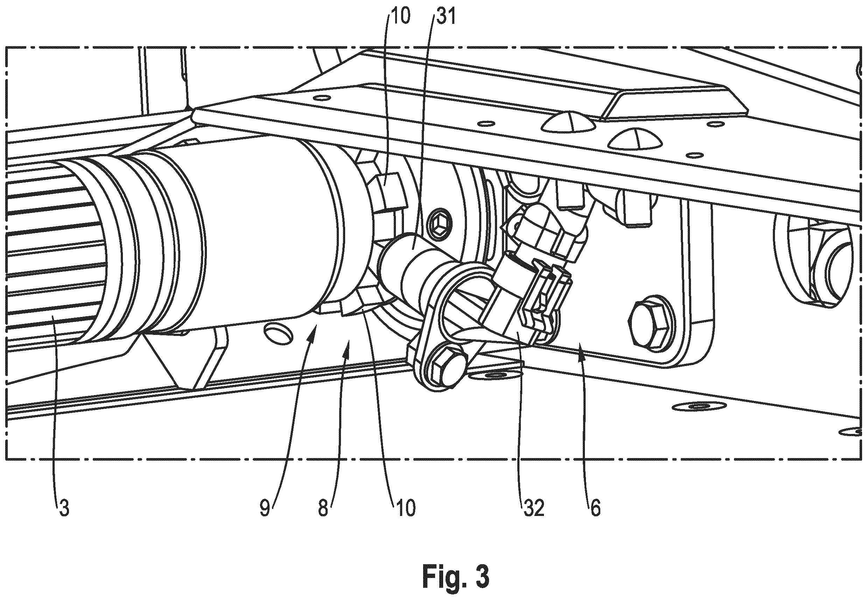

Die **Figur 3** zeigt einen Ausschnitt aus der **Figur 2** in perspektivischer Darstellung, wobei eine Einrichtung **8** zur Drehzahlerfassung der ersten, von dem Hydraulikmotor **6** drehangetriebenen Rolle **3** zu erkennen ist. Die erste Rolle **3** besitzt zwecks Drehantrieb eine Welle, die in der **Figur 3** jedoch nicht explizit zu erkennen ist. An einem in der **Figur 3** gezeigten Endbereich der ersten Rolle **3** ist auf der Welle eine Scheibe **9** mit Zähnen **10** angeordnet, die drehfest mit der Welle verbunden ist und somit analog zu der Welle sowie der ersten Rolle **3** dreht. Im Bereich der Scheibe **9** ist ein Sensor **31** angebracht, der die Anzahl vorbeibewegten Zähne **10** erfasst. Der Sensor **31,** der im vorliegenden Fall als optischer Sensor ausgebildet ist, ist mittels einer entsprechenden Steckverbindung **32** an einem Rahmen **33** des Förderbandes **1** befestigt. Anhand der Anzahl der vorbeibewegten Zähne **10** kann auf die Drehzahl der ersten Rolle **3** geschlossen werden.

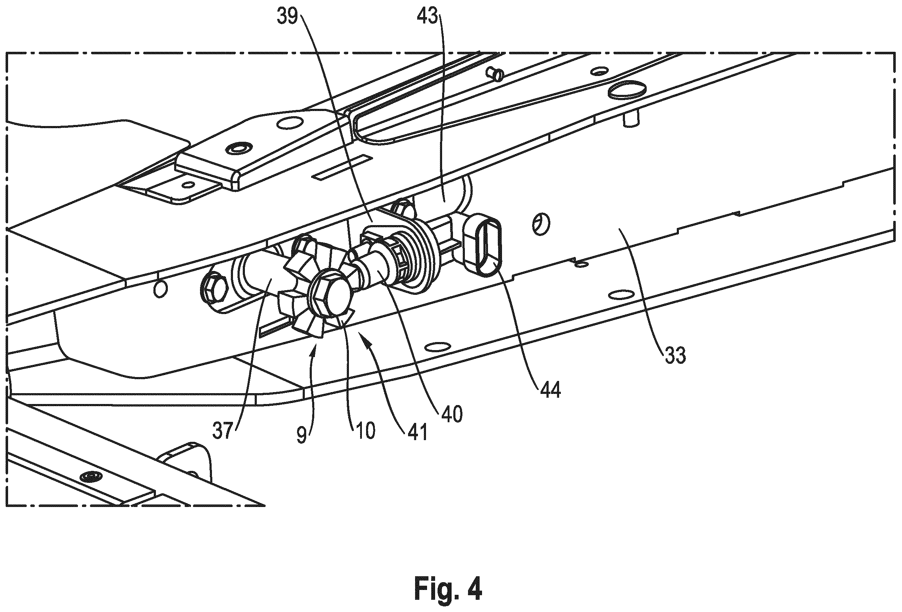

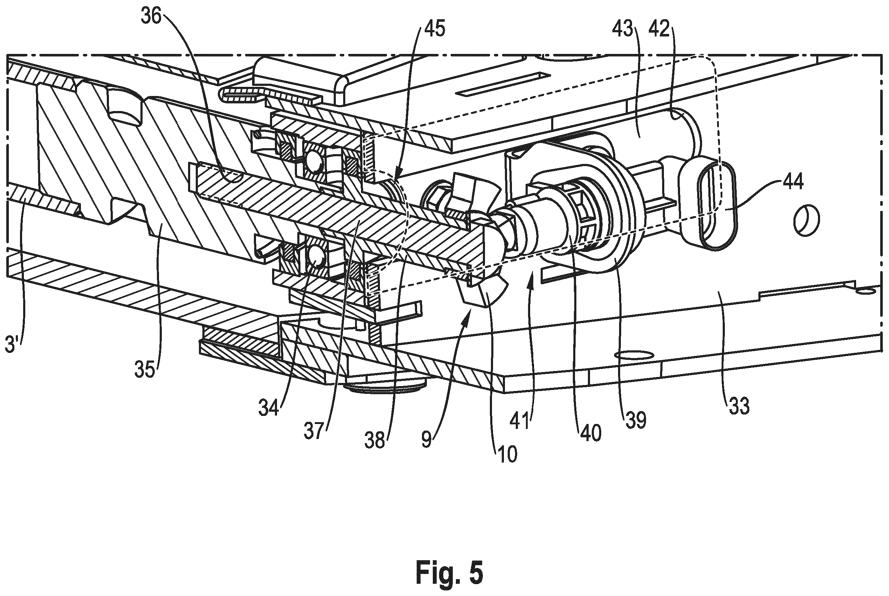

In den **Figuren 4** **und** **5** ist jeweils ein Ausschnitt aus der **Figur 2** in perspektivischer Darstellung gezeigt, wobei die **Figur 5** einen Schnitt durch die zweite Rolle **3'** zeigt. Beide Figuren zeigen einen Endbereich der zweiten Rolle **3',** die nicht drehangetrieben, sondern in einem Lager **34** mitlaufend ausgebildet ist, so dass sie um ihre Drehachse **7** drehbar ist. Die Rolle **3'** besitzt ein Rollenkörperendstück **35,** das letztlich zur eigentlichen Lagerung in dem Lager **34** vorgesehen ist. Ein nicht in den Figuren zu erkennendes gegenüberliegender Endbereich der zweiten Rolle 3' ist analog aufgebaut und gelagert, so dass die zweite Rolle **3'** beidseitig jeweils in dem Lager **34** einliegt, das wiederum jeweils an dem Rahmen **33** der Fördereinrichtung **12** befestigt ist. In Längsrichtung der Rolle **3'** ergibt sich somit folgende Bauteilabfolge: Rahmen **33,** Lager **34,** Rollenkörperendstück **35,** Rolle **3',** Rollenkörperendstück **35,** Lager **34** und Rahmen **33.**

Wie insbesondere in der **Figur 5** gut zu erkennen ist, ist in dem Rollenkörperendstück **35,** das eine entsprechende Ausnehmung **36** besitzt, eine Schraube **37** eingesetzt, wobei ein Außengewinde der Schraube **37** in ein entsprechendes Innengewinde der Ausnehmung **36** eingreift.. Es ist gut zu erkennen, dass die Schraube **37** durch das Lager **34** der Rolle **3'** sowie durch eine Öffnung **45** in dem Rahmen **33** geführt ist, so dass sie auf einer der Rolle **3'** abgewandten Seite des Rahmens **33** endet. Auf der Schraube **37** ist ein Wellensegment **38** angeordnet, das ebenfalls durch die Öffnung **45** im Rahmen **33** geführt ist und auf der der Rolle **3'** abgewandten Seite des Rahmens **33** endet. Auf dem Wellensegment **38** ist wiederum auf der der Rolle **3'** abgewandten Seite des Rahmens **33** endseitig eine Scheibe **9** mit Zähnen **10** drehfest angebracht, die analog zu der zweiten Rolle **3'** sowie dem Rollenkörperendstück **35** dreht. Die Rolle **3',** die Schraube **37,** das Wellensegment **38** sowie die Scheibe **9** verlaufen koaxial zueinander. Die Schraube **37** dient zur mittelbaren Verbindung des Wellensegments **38** mit der Rolle **3',** wobei auch andere Verbindungen zwischen Wellensegment **38** und Rolle **3'** denkbar sind.

An dem Rahmen **33** der Fördereinrichtung **12** ist mit Hilfe eines Halters **39** ein Sensor **40** in Form eines induktiven Sensors befestigt, der die Anzahl vorbeibewegter Zähne **10** erfasst, so dass auf die vorliegende Drehzahl der zweiten Rolle **3'** geschlossen werden kann. Demnach besitzt die zweite Rolle **3'** ebenfalls eine Einrichtung **41** zur Drehzahlerfassung, wobei sich diese auf einer der Rolle **3'** abgewandten Seite des Rahmens **33** befindet. Das bedeutet, dass sich die Einrichtung **41** zur Drehzahlerfassung außerhalb eines Arbeitsbereichs der zweiten Rolle **3'** befindet, so dass sie vor Verschmutzungen geschützt ist.

Der Halter **39** für den Sensor **40** ist so an dem Rahmen **33** der Fördereinrichtung **12** angebracht, dass er innerhalb eines Langlochs **42** verschiebbar ist. Hierzu ist der Halter **39** an einem Schlitten **43** befestigt, der entlang des Rahmens **33** verschieblich ist. Der Schlitten **43** wird im vorliegenden Fall von einer Platte gebildet, an der wiederum der Halter **39** angeschraubt ist. Demnach befindet sich der Schlitten **43** auf einer der Rolle **3'** zugewandten Seite des Rahmens **33,** wohingegen der Halter **39** auf einer der Rolle **3'** abgewandten Seite des Rahmens **33** liegt, wobei der Halter **39** durch das Langloch **42** geführt ist. Der Halter **39** ist stufenlos in verschiedenen Positionen fixierbar, so dass er im Betrieb der Fördereinrichtung **12** fest in seiner Position verbleibt.

Die verschiebliche Lagerung des Halters **39** ist von Vorteil, da auf diese Weise Längenänderungen des Förderbandes **1** durch Verschieben der zweiten Rolle **3'** ausgeglichen werden können. Auch ist es hierdurch möglich, die Rolle **3'** von dem Förderband **1** wegzubewegen, so dass selbiges locker hängt und zu Wartungs- oder Reparaturzwecken entfernt werden kann.

Gemäß dem vorliegenden Ausführungsbeispiel ist vorgesehen, dass eine Verschiebung des Halters **39** an eine Verschiebung der zweiten Rolle **3'** mittels der Spannvorrichtung **4** gekoppelt ist. Hierzu ist der Schlitten **43** mit der Spannvorrichtung **4** derart verbunden, dass der Schlitten **43** mittels der Spannvorrichtung **4** bewegbar ist.

Ferner ist in den **Figuren 4** **und** **5** ein ISOBUS Datenanschluss **44** dargestellt, über den die von dem Sensor **40** erfassten Daten zu einem nicht in den Figuren dargestellten Datenverarbeitungssystem geleitet werden können. Das Datenverarbeitungssystem nimmt einen Vergleich der erfassten Drehzahlen der ersten und zweiten Rolle **3, 3'** vor. Stellt das Datenverarbeitungssystem eine Differenz der erfassten Drehzahlen fest, so kann darauf geschlossen werden, dass das Förderband **1** nicht ordnungsgemäß umläuft, so dass entsprechende Maßnahmen ergriffen werden. Diese Maßnahmen können ebenfalls von dem Datenverarbeitungssystem ergriffen werden.

### Bezugszeichenliste

- 1: Förderband
- 2: Schneidwerk
- 3: Rolle
- 3': Rolle
- 4: Spannvorrichtung
- 5: Betätigungshebel
- 6: Motor
- 7: Drehachse
- 8: Einrichtung zur Drehzahlerfassung
- 9: Scheibe
- 10: Zahn
- 11: Messerbalken
- 12: Fördereinrichtung
- 13: Mittenabschnitt
- 14: Mittenfördereinrichtung
- 15: erste Transportrichtung
- 16: erste Seitenfördereinrichtung
- 17: zweite Transportrichtung
- 18: zweite Seitenfördereinrichtung
- 19: dritte Transportrichtung
- 20: zweite Mittenfördereinrichtung
- 21: Seitenabschnitt
- 22: vierte Transportrichtung
- 23: Grundrahmen
- 24: Breite
- 25: Längsachse des Schneidwerks
- 26: Einzugsvorrichtung
- 27: Einzugswalze
- 28: Finger
- 29: Einzugskanal
- 30: Längsachse des Mittenabschnitts
- 31: Sensor erste Rolle
- 32: Steckverbindung
- 33: Rahmen der Fördereinrichtung
- 34: Lager
- 35: Rollenkörperendstück
- 36: Ausnehmung
- 37: Schraube
- 38: Wellensegment
- 39: Halter zweiter Sensor
- 40: Sensor zweite Rolle
- 41: Zweite Einrichtung zur Drehzahlerfassung
- 42: Langloch
- 43: Schlitten
- 44: ISOBUS Datenanschluss
- 45: Öffnung
- α: Winkel

## Patentansprüche

1. Fördereinrichtung (12) zur Verwendung in einem Schneidwerk (2) einer landwirtschaftlichen Erntemaschine, umfassend einen Grundrahmen (23) sowie mindestens ein Förderband (1), das endlos um zwei parallel zueinander angeordneten Rollen (3, 3') umlaufend ist, wobei ein Abstand zwischen den beiden Rollen (3, 3') mittels einer Spannvorrichtung (4) einstellbar ist, wobei eine erste Rolle (3) drehantreibbar ist und eine zweite Rolle (3') frei umlaufend gelagert ist, wobei der ersten angetriebenen Rolle (3) eine Einrichtung zur Drehzahlerfassung (8) zugeordnet ist, wobei die Einrichtung zur Drehzahlerfassung (8) dazu eingerichtet und vorgesehen ist, eine Drehzahl der ersten Rolle (3) zu erfassen, **dadurch gekennzeichnet, dass** der zweiten Rolle (3') eine zweite Einrichtung zur Drehzahlerfassung (41) zugeordnet ist, wobei die Einrichtung zur Drehzahlerfassung (41) dazu eingerichtet und vorgesehen ist, eine Drehzahl der zweiten Rolle (3') im Betrieb des Förderbandes (1) zu erfassen.

2. Fördereinrichtung (12) nach Anspruch 1, **dadurch gekennzeichnet, dass** die zweite Einrichtung zur Drehzahlerfassung (41) eine analog zu der zweiten Rolle (3') drehbare Scheibe (9) mit Zähnen (10) und einen feststehenden Sensor (40) zur Erfassung von vorbeibewegten Zähnen (10) der Scheibe (9) umfasst.

3. Fördereinrichtung (12) nach Anspruch 2, **gekennzeichnet durch** ein Wellensegment (38), das endseitig mittelbar oder unmittelbar, vorzugsweise lösbar, drehfest mit der Rolle (3') verbunden ist, wobei die Scheibe (9) mit Zähnen (10) auf dem Wellensegment (38) positioniert ist.

4. Fördereinrichtung (12) nach Anspruch 3, **dadurch gekennzeichnet, dass** das Wellensegment (38) durch eine Öffnung (45) in einem Rahmen (33) der Fördereinrichtung (12) geführt ist und auf einer dem Lager (34) und der zweiten Rolle (3') abgewandten Seite des Rahmens (33) der Fördereinrichtung (12) endet, wobei die Scheibe (9) auf der dem Lager (34) und der Rolle (3') abgewandten Seite des Wellensegmentes (38) angeordnet ist.

5. Fördereinrichtung (12) nach einem der Ansprüche 2 bis 4, **gekennzeichnet durch** einen Halter (39) für den Sensor (40), wobei der Halter (39) in einem Bereich der Scheibe (9) an der Fördereinrichtung (12) angeordnet ist, vorzugsweise mittelbar oder unmittelbar an dem Rahmen (33) befestigt ist.

6. Fördereinrichtung (12) nach Anspruch 5, **dadurch gekennzeichnet, dass** der Halter (39) für den Sensor (40) an einem entlang des Rahmens (33) verschieblichen Schlitten (43) befestigt ist, wobei der Halter (39) vorzugsweise innerhalb eines Langlochs (42) in dem Rahmen (33) verschieblich ist, wobei das Langloch (42) weiter vorzugsweise eine Längsachse besitzt, die parallel zu einer Verschiebungsrichtung der mittels der Spannvorrichtung (4) verschobenen zweiten Rolle (3') verläuft.

7. Fördereinrichtung (12) nach Anspruch 6, **dadurch gekennzeichnet, dass** eine Verschiebung des Halters (39) an eine Verschiebung der zweiten Rolle (3') durch die Spannvorrichtung (4) gekoppelt ist.

8. Schneidwerk (2) für eine landwirtschaftliche Erntemaschine, insbesondere eines Mähdreschers, umfassend
- eine Schneideinrichtung zum Abschneiden von auf einem Feld aufstehenden Pflanzen,
- mindestens eine Fördereinrichtung (12) zur Förderung der abgeschnittenen Pflanzen in Richtung einer rückwärtigen Übergabeöffnung,
**dadurch gekennzeichnet, dass** mindestens eine der Fördereinrichtungen (12) gemäß einem der Ansprüche 1 bis 7 ausgebildet ist.

9. Landwirtschaftliche Erntemaschine, insbesondere Mähdrescher, **gekennzeichnet durch** mindestens ein Schneidwerk (2) gemäß Anspruch 8.

10. Landwirtschaftliche Erntemaschine nach Anspruch 9, **gekennzeichnet durch** eine Datenverarbeitungseinrichtung, die in Daten übertragender Weise mit den Einrichtungen der Drehzahlerfassung (8, 41) verbunden ist, wobei die Datenverarbeitungseinrichtung dazu vorgesehen und eingerichtet ist, die von den Einrichtungen (8, 41) erfassten Drehzahlen zu verarbeiten und einen Vergleich der erfassten Drehzahlen vorzunehmen.

11. Landwirtschaftliche Erntemaschine nach Anspruch 10, **dadurch gekennzeichnet, dass** die Datenverarbeitungseinrichtung dazu vorgesehen und eingerichtet ist, bei einem Detektieren einer Abweichung der Drehzahlen der ersten und zweiten Rolle (3, 3`) ein Signal zu erzeugen.
